# EUROPEAN PATENT APPLICATION

(11) **EP 4 525 183 A1**
(43) Date of publication of application: **19.03.2025**
(21) Application number: 23803789.9
(22) Date of filing: 08.05.2023
(51) Int. Cl.: H01M 50/457, H01M 50/426, H01M 50/446, H01M 50/46

(54) **SEPARATOR FOR SECONDARY BATTERY, AND SECONDARY BATTERY COMPRISING SAME**

(30) Priority: 09.05.2022 KR 20220056871
(71) Applicant: SAMSUNG SDI CO., LTD., Giheung-gu Yongin-si, Gyeonggi-do 17084 (KR)
(72) Inventor: KIM, Soo Hee, Yongin-Si Gyeonggi-do 17084 (KR); KIM, Ha Na, Yongin-Si Gyeonggi-do 17084 (KR); KIM, Byung Soo, Yongin-Si Gyeonggi-do 17084 (KR)
(74) Representative: Gulde & Partner
(86) International application number: PCT/KR2023/006230
(87) International publication number: WO 2023/219366

(57) **Abstract**

Disclosed are a separator for a secondary battery, and a secondary battery including the same, the separator including a porous substrate, an inorganic layer located on at least one side of the porous substrate, and an adhesive layer located on the inorganic layer, wherein the adhesive layer includes first vinylidene fluoride-based polymer particles and second vinylidene fluoride-based polymer particles, having different solation temperatures.

## Description

### Technical Field

The present disclosure relates to a separator for a secondary battery and a secondary battery including the same.

### Background Art

The miniaturization and weight reduction of lithium batteries are becoming important to meet the miniaturization and high performance of various devices. In addition, the discharge capacity, energy density, and cycle characteristics of lithium batteries are becoming important for application in fields such as electric vehicles. Lithium batteries with a large discharge capacity per unit volume, high energy density, and high capacity, as well as excellent lifespan characteristics and safety, are required to meet the applications described above.

In a lithium battery, a separator is arranged between a positive electrode and a negative electrode to prevent a short circuit. An electrode assembly including a positive electrode, a negative electrode, and a separator arranged between the positive electrode and the negative electrode is wound to have a jelly roll shape, and the jelly roll is rolled to improve the adhesion between the positive electrode / negative electrode and the separator in the electrode assembly. During this rolling process, the interface resistance between the positive electrode and the separator and the interface resistance between the negative electrode and the separator increases, and thus, as the charge and discharge cycle of the lithium battery is repeated, the capacity and high rate charge and discharge characteristics of the lithium battery may deteriorate.

Accordingly, to manufacture lithium batteries with high capacity and excellent lifespan characteristics and safety, a smaller thickness and a reduced weight are required, and thus, a separator with strong adhesion and improved stability is required.

### Disclosure

### Technical Problem

One aspect is to provide a separator for a secondary battery with improved adhesion and stability.

Another aspect is to provide a secondary battery with high capacity, excellent capacity and lifespan characteristics, and improved safety, including the separator described above.

### Technical Solution

According to one aspect,
provided is a separator for a secondary battery, the separator including a porous substrate, an inorganic layer located on at least one side of the porous substrate, and an adhesive layer located on the inorganic layer,
wherein the adhesive layer includes first vinylidene fluoride-based polymer particles and second vinylidene fluoride-based polymer particles, having different solation temperatures. The first vinylidene fluoride-based polymer particles are
a first copolymer containing a vinylidene fluoride (VDF) repeating unit, a hexafluoropropylene (HFP) repeating unit, and a repeating unit having one or more functional groups selected from C=O and OH groups, wherein the solation temperature of the first copolymer is 85 °C or lower, the content of the hexafluoropropylene (HFP) repeating units is 10 mol% or more, and the content of the repeating units having one or more functional groups selected from the C=O and OH groups is 3 mol% or less.

The second vinylidene fluoride-based polymer particles are selected from
i) polyvinylidene fluoride particles having a solation temperature of 100 °C or higher, and
ii) a second copolymer having a solation temperature of 100 °C or higher and containing a vinylidene fluoride (VDF) repeating unit and a hexafluoropropylene (HFP) repeating unit,
wherein the content of the hexafluoropropylene (HFP) repeating units in the second copolymer is 3 mol% or less.

A separator for a secondary battery is provided, wherein the first vinylidene fluoride-based polymer particles and the second vinylidene fluoride-based polymer particles have a size of 200 nm to 1 µm.

According to another aspect, provided is a secondary battery including a positive electrode, a negative electrode, and the above-described separator provided therebetween.

### Advantageous Effects

The separator for a secondary battery according to one embodiment contains an adhesive layer with improved adhesion, ensuring excellent adhesion and good air permeability after the adhesion process, and having excellent adhesion between the separator and the electrodes after charging and discharging, thereby preventing deformation of the shape of the battery. Therefore, it is possible to provide a secondary battery with improved capacity, lifespan, and safety by using the separator.

### Description of Drawings

FIG. 1 is a schematic diagram showing a cross-section of a separator of a lithium battery according to one embodiment.
FIG. 2 is a schematic diagram showing a cross-section of a separator of a lithium battery according to another embodiment.
FIG. 3 is a schematic diagram showing a cross-section of a separator of a lithium battery according to another embodiment.
FIG. 4 is a schematic diagram of a lithium battery according to one embodiment.

### [Explanation of Reference numerals]

10: Separator 20: Porous substrate
30: Inorganic layer 40: Adhesive layer
140: Positive electrode 150: Negative electrode
160: Electrode assembly 170: Case

### Mode for Invention

Hereinafter, a separator for a secondary battery according to embodiments and a secondary battery including the same will be described in more detail.

Lithium secondary batteries generally have a separator arranged between a positive electrode and a negative electrode and are subjected to a heat press process at a certain temperature and pressure. Through this hot press process, the adhesion of the interfaces between the positive electrode and the separator and between the negative electrode and the separator increases, thereby maintaining the shape of the battery. When the adhesion is insufficient, the interface with the electrode is lifted, which fundamentally causes a continuous decrease in capacity according to the cycle of the lithium polymer battery and a deterioration of high rate charging and discharging characteristics, and reduces the safety of the battery, thereby requiring improvement thereon.

Accordingly, to solve the above-mentioned problems, the present inventors completed a separator for a secondary battery, the separator having an adhesive layer using first vinylidene fluoride-based polymer particles and second vinylidene fluoride-based polymer particles together, having different solation temperatures. Using such an adhesive layer, it is possible to secure excellent adhesion and air permeability after the adhesion process of the secondary battery, to improve the adhesion of the adhesive layer to the inorganic layer, and to provide a separator with low resistance. As a result, it is possible to control adhesion strength between the electrode and the separator to be greater, thereby manufacturing a lithium secondary battery with stable cell performance without abnormal behavior such as expansion of the cell during charging and discharging.

The first vinylidene fluoride-based polymer particles are a first copolymer containing a vinylidene fluoride (VDF) repeating unit, a hexafluoropropylene (HFP) repeating unit, and a repeating unit having one or more functional groups selected from C=O and OH groups, wherein the solation temperature of the first copolymer is 85 °C or lower, the content of the hexafluoropropylene (HFP) repeating units is 10 mol% or more, and the content of the repeating units having one or more functional groups selected from the C=O and OH groups is more than 0 mol% but not more than 3 mol%. The second vinylidene fluoride-based polymer particles are selected from i) polyvinylidene fluoride particles having a solation temperature of 100 °C or higher, and ii) a second copolymer having a solation temperature of 100 °C or higher and containing a vinylidene fluoride (VDF) repeating unit and a hexafluoropropylene (HFP) repeating unit, wherein the content of the HFP repeating units in the second copolymer is 3 mol% or less.

The first vinylidene fluoride-based polymer particles and the second vinylidene fluoride-based polymer particles each have a size of 200 nm to 1 µm.

The content of the second vinylidene fluoride-based polymer particles is 10 to 90 parts by weight, 20 to 90 parts by weight, 20 to 80 parts by weight, 30 to 80 parts by weight, 40 to 80 parts by weight, 50 to 80 parts by weight, or 50 to 75 parts by weight, based on 100 parts by weight of total weight of the first vinylidene fluoride-based polymer particles and the second vinylidene fluoride-based polymer particles.

The weight ratio of the first vinylidene fluoride-based polymer particles and the second vinylidene fluoride-based polymer particles is 5:5 to 2:8.

In the first copolymer, the repeating unit having one or more functional groups selected from C=O and OH groups is, as a non-limiting example, at least one selected from the group consisting of (meth)acrylic acid, a derivative of (meth)acrylate having a hydroxy group, itaconic acid or a derivative thereof, maleic acid or a derivative thereof, and hydroxyalkane allyl ether.

The third repeating unit having one or more functional groups selected from C=O and OH groups is, for example, maleic acid. When the first copolymer containing a repeating unit having one or more functional groups selected from C=O and OH groups is used, the strength of adhesion to the electrode facing the adhesive layer may be further increased due to the presence of the functional groups described above.

The solation temperature of the first vinylidene fluoride-based polymer particles is 70 to 85 °C, for example, 80 to 82 °C. When the solation temperature of the first vinylidene fluoride-based polymer particles is within the ranges above, the first vinylidene fluoride-based polymer particles may serve as an adhesive during the high-temperature pressing process of the battery.

In the first vinylidene fluoride-based polymer particles, the content of the hexafluoropropylene (HFP) repeating units is 10 mol% to 20 mol%, 12 to 18 mol%, or 13 mol% to 17 mol%, and the content of the repeating units having one or more functional groups selected from C=O and OH groups is more than 0 mol% but not more than 3 mol%, 1 to 3 mol%, or 1 to 2 mol%.

In the first copolymer, the vinylidene fluoride (VDF) repeating unit may be included in an amount of 79 to 87 mol%, or 80 to 86 mol%, or 82 to 85 mol%. When the contents of the vinylidene fluoride (VDF) repeating unit, the HFP repeating unit, and the repeating unit having one or more functional groups selected from C=O and OH groups are within the ranges above, respectively, it is possible to improve adhesion to the electrode and secure air permeability.

The first copolymer contains, for example, a vinylidene fluoride (VDF) repeating unit, a hexafluoropropylene (HFP) repeating unit, and a maleic acid repeating unit, which is a repeating unit having one or more functional groups selected from C=O and OH groups.

According to one embodiment, the contents of the vinylidene fluoride (VDF) repeating units, the hexafluoropropylene (HFP) repeating units, and the repeating units having one or more functional groups selected from C=O and OH groups are 79 to 87 mol% (particularly 84 mol%), 10 to 20 mol% (particularly 15 mol%), and 1 to 3 mol% (particularly 1 mol%), respectively. Here, the repeating unit having one or more functional groups selected from C=O and OH groups is, for example, a maleic acid repeating unit.

In the second vinylidene fluoride-based polymer particles, the solation temperature of the polyvinylidene fluoride particles is 100 to 150 °C, and when the solation temperature is within the ranges above, the polyvinylidene fluoride particles can serve as an organic filler, thereby maintaining good air permeability even after the high-temperature pressing process.

The solation temperature of the second copolymer particles is 100 °C to 150 °C, or 100 to 140 °C.

The second vinylidene fluoride-based polymer particles are polyvinylidene fluoride (homopolymer) or have a content of the HFP repeating unit of 3 mol% or less, 2 mol% or less, or 1 mol% or less.

In the second copolymer, the vinylidene fluoride (VDF) repeating units may be included in an amount of 97 mol% or more, for example, 97 to 99 mol%.

In the second copolymer, when the vinylidene fluoride (VDF) repeating unit and the hexafluoropropylene (HFP) repeating unit are included in the ranges above, respectively, the second copolymer may secure excellent adhesion and electrolyte impregnation.

In the adhesive layer according to one embodiment, the total content of the first vinylidene fluoride-based polymer particles and the second vinylidene fluoride-based polymer particles is 10 to 98 parts by weight, based on 100 parts by weight of total weight of the adhesive layer. When the content of the first vinylidene fluoride-based polymer particles is within the range described above, the interface resistance between the separator and the electrode is reduced, and thus, a separator with improved adhesion can be manufactured.

When the adhesive layer contains only the first vinylidene fluoride-based polymer particles, the adhesion is excellent, but resistance may increase due to a rapid increase in air permeability after the high-temperature pressing process. When the adhesive layer contains only the second vinylidene fluoride-based polymer particles, the increase in air permeability after the high-temperature pressing process is low, but the adhesion may be reduced.

In the adhesive layer of the separator according to one embodiment, the first vinylidene fluoride-based polymer particles and the second vinylidene fluoride-based polymer particles each have a size of 200 nm to 1 µm, 200 nm to 800 nm, 200 to 600 nm, 200 to 500 nm, or 200 to 300 nm. When the first vinylidene fluoride-based polymer particles and the second vinylidene fluoride-based polymer particles each have a size within the range described above, it is possible to prevent the air permeability characteristics from deteriorating due to the blocking of the pores of the inorganic layer and the porous substrate.

In this specification, the term "size" refers to a particle diameter when the particle to be measured is spherical, and refers to a major axis length when the particle is non-spherical. The particle diameter is, for example, an average particle diameter, and the major axis length is, for example, an average major axis length. The average particle diameter and average major axis length represent an average value of the measured particle diameters and the measured major axis lengths, respectively.

In this specification, the size of a particle may be evaluated by using a particle size analyzer, a scanning electron microscope, or a transmission electron microscope. As the particle size analyzer, for example, HORIBA, LA-950 laser particle size analyzer may be used.

The average particle diameter is, for example, an average particle diameter observed with a scanning electron microscope (SEM), and may be calculated as an average value of the particle diameters of about 10 to 30 particles by using an SEM image.

When the particle size is measured by using a particle size analyzer, the average particle diameter represents D50. D50 refers to an average diameter of particles whose cumulative volume corresponds to 50 vol% in the particle size distribution, and refers to a value of the particle diameter corresponding to 50 % from the smallest particle when the total number of particles is 100% in the particle size distribution curve accumulated in the order of the smallest particle size to the largest particle size.

D50 may be measured by using a particle size analyzer. Alternatively, D50 may be easily obtained by measurement with a measuring device using dynamic light-scattering, data analysis, counting the number of particles corresponding to each particle size range, and then calculation therefrom.

The first vinylidene fluoride-based polymer particles and the second vinylidene fluoride-based polymer particles each have a weight average molecular weight of 50,000 to 500,000, for example, 150,000 to 450,000, for example, 300,000 to 450,000. When the first vinylidene fluoride-based polymer particles and the second vinylidene fluoride-based polymer particles each have a weight average molecular weight within the ranges above, the adhesion of the separator is improved.

The first vinylidene fluoride-based polymer particles and the second vinylidene fluoride-based polymer particles are aqueous particles. As the first and second vinylidene fluoride-based polymer particles are aqueous particles, the particles may be easily dispersed or dissolved in water, and thus, an adhesive layer may be formed by using an aqueous slurry, thereby making a non-aqueous organic solvent environmentally friendly.

In the separator for a secondary battery according to one embodiment, the adhesive layer may further contain an additional adhesive binder such as fluorine-based resin, polyacrylic acid-based compounds, or any combination thereof. The content of this additional adhesive binder is 0.1 to 5 parts by weight, 0.1 to 3 parts by weight, 0.5 to 3 parts by weight, or 0.5 to 2 parts by weight, based on the total weight of the adhesive layer. When the total content of the additional adhesive binder is within the ranges above, the binding force between the electrode and the separator can be effectively controlled to be stronger.

The adhesive binder may also serve as a dispersant.

In the adhesive binder, the weight average molecular weight of the polyacrylic acid-based compounds is 50,000 to 500,000, for example, 150,000 to 450,000, for example, 300,000 to 450,000. When the weight average molecular weight of the polyacrylic acid-based compounds is within the ranges above, the adhesion of the separator is improved.

The polyacrylic acid-based compounds include, for example, polyacrylic acid, polymethylacrylic acid, polyethylacrylic acid, polybutylacrylic acid, polyhexylacrylic acid, polyhydroxyethyl methacrylic acid, polyaminoacrylic acid, or any combination thereof.

The polyacrylic acid-based compounds (PAA compounds) may include AQC commercially available from Sumitomo Corporation.

The fluorine-based resin serves as a binder to fix inorganic particles onto a porous substrate and simultaneously provides excellent adhesion between the porous substrate and one side of the adhesive layer and between the electrode and the other side of the adhesive layer. The fluorine-based resin, which is a binder, has an average particle diameter of 100 to 300 nm. When the fluorine-based resin has an average particle diameter within the range described above, the adhesive layer has very excellent adhesion to the porous substrate. Although the separator is exposed to high temperature, the binder has high heat resistance, and thus, the network-structured matrix form thereof may be maintained.

The fluorine-based resin has a glass transition temperature (Tg) of 50 °C or higher and a weight average molecular weight of 200,000 to 3,000,000 g/mol, 200,000 to 2,000,000 g/mol, or 300,000 to 1,200,000 g/mol. In this specification, the weight average molecular weight may be an average molecular weight measured by using gel permeation chromatography with polystyrene standards. When the weight average molecular weight of the fluorine-based resin is within the ranges above, the separator may have excellent adhesion.

The fluorine-based resin is polyvinylidene fluoride, a polyvinylidene fluoride-hexafluoropropylene copolymer, a polyvinylidene fluoride-trichloroethylene copolymer, a polyvinylidene fluoride-chlorotrifluoroethylene copolymer, or any combination thereof. The (meth)acrylic binder is polyacrylate, polymethacrylate, polybutylacrylate, polyacrylonitrile, or any combination thereof.

In the vinylidene fluoride-hexafluoropropylene copolymer, the vinylidene fluoride repeating unit may be included in an amount of 90 mol% to 99.5 mol%, 93 mol% to 99 mol%, or 95 mol% to 99 mol%. When the vinylidene fluoride repeating unit is included in the ranges above, the vinylidene fluoride-hexafluoropropylene copolymer may secure excellent adhesion and electrolyte impregnation.

The crystallinity of the fluorine-based resin may be 35 % to 45 %, for example, 38 % to 45 %, or 40 % to 45 %. A separator with adhesion, containing fluorine-based resin having crystallinity in the ranges above, exhibits excellent adhesion to a substrate.

When the adhesive layer further includes the (meth)acrylic binder, .the mixed weight ratio of the total weight of the first particles and the second particles and the (meth)acrylic binder is 0.01:1 to 1:1, or 0.25:1 to 0.75:1.

According to another embodiment, the adhesive layer may further include, for example, one or more selected from the group consisting of polyvinylpyrrolidone, polyvinyl acetate, polyethylene oxide, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, carboxyl methyl cellulose, and an acrylonitrile-styrene-butadiene copolymer.

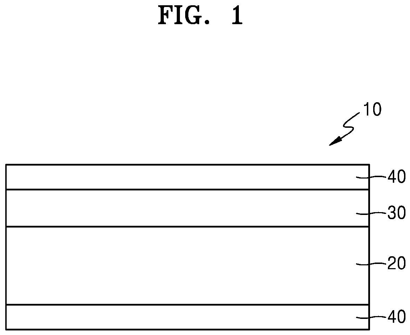

Hereinafter, a separator for a secondary battery according to one embodiment will be described in detail with reference to FIG. 1.

The secondary battery is, for example, a lithium secondary battery.

Referring to FIG. 1, a separator 10 for a secondary battery according to one embodiment includes a porous substrate 20 and an inorganic layer 30 disposed on both sides of the porous substrate 20.

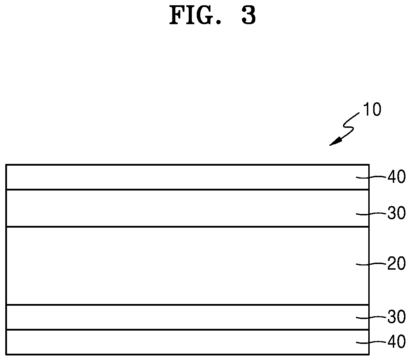

In the separator of FIG. 1, the inorganic layer 30 is disposed on both sides of the porous substrate 20, but the inorganic layer 30 may be disposed on one side of the porous substrate, as shown in FIG. 3. In the separator of FIG. 3, an adhesive layer 40 is disposed on the inorganic layer 30.

The adhesive layer 40 contains first vinylidene fluoride-based polymer particles and second vinylidene fluoride-based polymer particles, having different solation temperatures. By including the adhesive layer 40 described above, the separator 10 can exhibit excellent adhesion and air permeability even after the adhesion process.

The adhesive layer 40 has a thickness of 0.01 µm to 10 µm, 0.01 µm to 4 µm, 0.1 µm to 3 µm, 0.1 µm to 2 µm, or 0.1 µm to 1 µm. Excellent adhesion is exhibited when the thickness of the adhesive layer is within the ranges above. The thickness of the adhesive layer is measured by using a film thickness gauge or using an image obtained after observation with a scanning electron microscope (SEM).

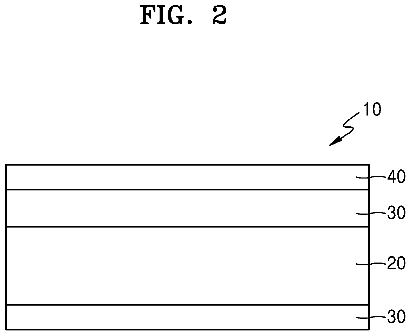

In the separator according to another embodiment, as shown in FIG. 2, an inorganic layer 30 may be further formed on the other side of the porous substrate 20. The inorganic layer 30 disposed on the other side of the porous substrate 20 may have a composition the same as or different from that of the inorganic layer 40 disposed on the one side of the porous substrate 20.

Although not shown in the drawings, a separator according to another embodiment may have a stacked structure in which the adhesive layer 40 is disposed on the other side of the porous substrate 20.

The inorganic particles contained in the inorganic layer 40 are not particularly limited, and inorganic particles commonly used in the art may be used. Specific examples of the inorganic particles usable in the present disclosure may include one or more selected from Al₂O₃, SiO₂, B₂O₃, Ga₂O₃, TiO₂, SnO₂, boehmite, BaSO₄, MgO, Mg(OH)₂, clay, ZnO, CaO, CeO₂, NiO, GaO, ZrO2, Y₂O₃, SrTiO₃, and BaTiO₃. These may be used alone or in a combination of two or more thereof. More specifically, Al₂O₃ (alumina) may be used.

The size of the inorganic particle is, for example, 1 µm to 20 µm, 2 µm to 15 µm, or 3 µm to 12 µm. In this specification, the term "size" refers to an average particle diameter when the particle is spherical, and refers to a major axis length when the particle is non-spherical. The average particle diameter refers to D50 based on volume. The average particle diameter is measured by using measurement devices, for example, using a laser diffraction method or a dynamic light scattering method. The average particle diameter is measured by using, for example, a laser scattering particle size distribution meter (e.g., HORIBA, LA-920), and is a value of the median diameter (D50) of particles whose the cumulative volume corresponds to 50 vol% from the smallest particle in the particle size distribution curve. The size of the inorganic particles may be evaluated by using a scanning electron microscope or a transmission electron microscope. The average particle diameter is, for example, an average particle diameter observed with a scanning electron microscope (SEM), and may be calculated as an average value of the particle diameters of about 10 to 30 particles by using an SEM image.

When using inorganic particles having the size described above, it is possible to prevent the dispersibility and coating processability of the inorganic particles in the inorganic layer from deteriorating, and to appropriately adjust the thickness of the inorganic layer, thereby enhancing mechanical properties. In addition, the size of the pores created in the separator is adjusted appropriately to reduce the possibility of internal short circuits occurring during charging and discharging of the battery.

The content of the inorganic particles in the inorganic layer is 50 to 95 parts by weight, 60 to 95 parts by weight, or 75 to 95 parts by weight, based on 100 parts by weight of total weight of the inorganic layer. When the content of the inorganic particles is within the ranges above, heat shrinkage of the separator can be effectively suppressed. When the content of the inorganic particles is within the ranges above, the heat dissipation characteristics of the inorganic particles can be sufficiently exhibited and heat shrinkage of the separator can be effectively suppressed.

The inorganic layer 30 constituting the separator 10 is a heat-resistant layer, and thus, the no shrinkage and fracture occurs at high temperatures and the adhesion to the substrate is improved.

The thickness of the inorganic layer 30 is 0.01 µm to 10 µm, 0.1 to 5 µm, 1 µm to 5 µm, 1 µm to 3 µm, or 1 µm to 2 µm.

The inorganic layer 30 contains inorganic particles and a binder. As the binder, a crosslinkable binder, a non-crosslinkable binder, or any combination thereof may be used. The binder is, for example, a non-crosslinkable binder, and non-limiting examples thereof may include a polyvinylidene fluoride (PVdF)-based polymer, polymethyl methacrylate, polyacrylonitrile, polyvinylpyrrolidone, polyvinylacetate, polyethylene oxide, cellulose acetate, cellulose acetate butylate, cellulose acetate propionate, cyanoethylpullulan, cyanoethylpolyvinyl alcohol, cyanoethyl cellulose, cyanoethyl sucrose, pullulan, carboxyl methyl cellulose, an acrylonitrile-butadiene-styrene copolymer, poly(acrylic acid-co-acrylamide-co-2-acrylamido-2-methylpropanesulfonic acid), a polyacrylamide-acrylic acid-hydroxyethyl acrylic copolymer, or any combination thereof.

The vinylidene fluoride-based polymer may be, for example, polyvinylidene fluoride, a vinylidene fluoride copolymer, or mixtures thereof. The vinylidene fluoride copolymer refers to a polymer including 5 wt% or less of repeating units other than vinylidene fluoride repeating units. The vinylidene fluoride copolymer may be, for example, a vinylidene fluoride-hexafluoropropylene copolymer.

The inorganic layer may further include a crosslinkable binder. By additionally including a non-crosslinkable binder in the inorganic layer, adhesion to the substrate or electrode and heat resistance can be further improved.

A crosslinkable binder refers to a substance that may produce a binder having a crosslinked structure by causing a crosslinking reaction. The crosslinkable binder may be selected from monomers, oligomers, polymers, or mixtures thereof, having one or more crosslinkable functional groups. By curing the crosslinkable binder, not only are physical and chemical bonds created between the monomers, oligomers or polymers, but physical and chemical bonds are also created between the binder produced by crosslinking and the surface-treated inorganic particles, improving adhesion to the substrate and increasing coating density, thereby making it possible to prepare a thin separator.

The monomers, oligomers or polymers having one or more functional groups have, for example, one or more functional groups selected from the group consisting of an acrylate group, a vinyl group, a hydroxy group, an epoxy group, an oxane group, an oxetane group, a carboxyl group, an amine group, an oxazoline group, an ester group, and an isocyanate group. The monomers, oligomers or polymers having one or more functional groups has 2 or more, 3 or more, or 4 or more functional groups.

The crosslinkable binder may include, for example, one or more acrylates selected from the group consisting of: alkyl (meth)acrylates such as methyl methacrylate and methyl acrylate; bifunctional (meth)acrylates such as ethylene glycol di(meth)acrylate, propylene glycol di(meth)acrylate, polyethylene glycol di(meth)acrylate, polypropylene glycol di(meth)acrylate, di(meth)acrylate of a polyoxyethylene/polyoxypropylene copolymer, butanediol di(meth)acrylate, and hexamethylene glycol di(meth)acrylate; trifunctional (meth)acrylates such as trimethylol propane tri(meth)acrylate, glycerin tri(meth)acrylate, tri(meth)acrylate of ethylene oxide adduct of glycerin, tri(meth)acrylate of propylene oxide adduct of glycerin, and tri(meth)acrylate of ethylene oxide and propylene oxide adduct of glycerin; polyfunctional (meth)acrylates having four or more functional groups, such as diglycerin hexa(meth)acrylate; polyfunctional urethane acrylate; polyfunctional epoxy acrylate; and polyester acrylate.

The crosslinkable binder may include, for example, vinylpyrrolidone, vinylcaprolactam, vinylimidazole, vinyl-methylacetamide, ethylvinylether, propylvinylether, butylvinylether, pentylvinylether, hexylvinylether, heptylvinylether, octylvinylether, nonylvinylether, decylvinylether, cyclohexylvinylether, ethylhexylvinylether, dodecylvinylether, octadecylvinylether, and the like.

The crosslinkable binder may include, for example, biphenol, bisphenol A, methanediol, ethanediol, propanediol, butanediol, pentanediol, hexanediol, heptanediol, octanediol, nonanediol, decanediol, and the like. Examples of the monomers, oligomers or polymers having one or more epoxy groups may include: diepoxyalkanes such as diepoxyethane, diepoxypropane, diepoxybutane, diepoxypentane, diepoxyhexane, diepoxyheptane, diepoxyoctane, diepoxynonane, and diepoxydodecane; glycidyl ethers such as bisphenol A diglycidyl ether, bisphenol F diglycidyl ether, brominated bisphenol A diglycidyl ether, phenol novolak glycidyl ether, and cresol novolak glycidyl ether; glycidyl esters such as hexahydrophthalic acid glycidyl ester, and dimer acid glycidyl ester; glycidyl amines such as glycidyl isocyanurate and tetraglycidyl diamino phenylmethane; linear aliphatic epoxides such as epoxidized polybutadiene; and alicyclic epoxides such as 3,4-epoxy-6-methylcyclohexylmethylcarboxylate and 3,4-epoxycyclohexylmethylcarboxylate.

The crosslinkable binder may include 4,4'-diphenylenemethane diisocyanate, toluene diisocyanate, tolylene diisocyanate, naphthylene diisocyanate, 4,4'-dicyclohexylenemethane diisocyanate, cyclohexylene diisocyanate, 3,3'-dimethylphenylene diisocyanate, diphenylmethane diisocyanate, 3,3'-dimethyldiphenylenemethane diisocyanate, 4,6'-xylylene diisocyanate, 4,4'-dicyclohexylmethane diisocyanate, 3,5,5-trimethylcyclohexylene diisocyanate, 1,6-hexamethylene diisocyanate, 2,2,4-trimethylhexamethylene diisocyanate, m-xylene diisocyanate, trimethylxylene diisocyanate, p-phenylene diisocyanate, isophorone diisocyanate, 1,5-naphthalene diisocyanate, trans-1,4-cyclohexyl diisocyanate, and the like.

Additionally, a compound represented by Formula 1 may be used as the crosslinkable binder: 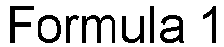 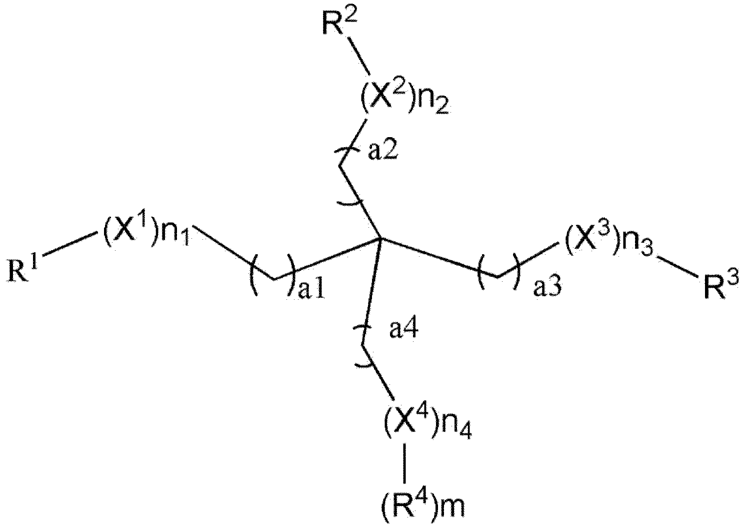 wherein, in Formula 1, X¹ to X³ are each an oxyethylene group, X⁴ is an oxyethylene group, or an alkyl group having 1 to 10 carbon atoms, R¹ to R⁴ is each independently any one functional group selected from the group consisting of a (meth)acrylate group, a hydroxy group, a carboxyl group, an ester group, a cyanate group, an isocyanate group, an amino group, a thiol group, an alkoxy group having 1 to 10 carbon atoms, a vinyl group, and a heterocyclic group, a¹ to a⁴ are each an integer of 1 to 10, n¹ to n³ are each an integer of 0 to 10, and at least one of n¹ to n⁴ is an integer of 1 to 10, provided that when X⁴ is the oxyethylene group, n⁴ is an integer of 1 to 10 and m is 1, and when X⁴ is the alkyl group having 1 to 10 carbon atoms, n⁴ is 1 and m is 0.

The ester group may be represented by -COOR, and the amino group may be represented by -NR^{a}R^{b}, wherein R, R^{a}, and R^{b} may each independently be any one selected from the group consisting of an alkyl group having 1 to 20 carbon atoms, an alkenyl group having 2 to 20 carbon atoms, an alkynyl group having 2 to 20 carbon atoms, a cycloalkyl group having 3 to 20 carbon atoms, a cycloalkenyl group having 3 to 20 carbon atoms, a cycloalkynyl group having 4 to 20 carbon atoms, and an aryl group having 6 to 30 carbon atoms. In addition, the heterocyclic group may be one selected from the group consisting of a heterocycloalkyl group having 2 to 20 carbon atoms, a heterocycloalkenyl group having 3 to 20 carbon atoms, a heterocycloalkynyl group having 3 to 20 carbon atoms, and a heteroaryl group having 6 to 20 carbon atoms, and may include heteroatoms selected from N, O, and S. The heterocyclic group may include, for example, an epoxy group, an oxetane group, and the like.

The compound of Formula 1 may include compounds of Formula 2 or 3: 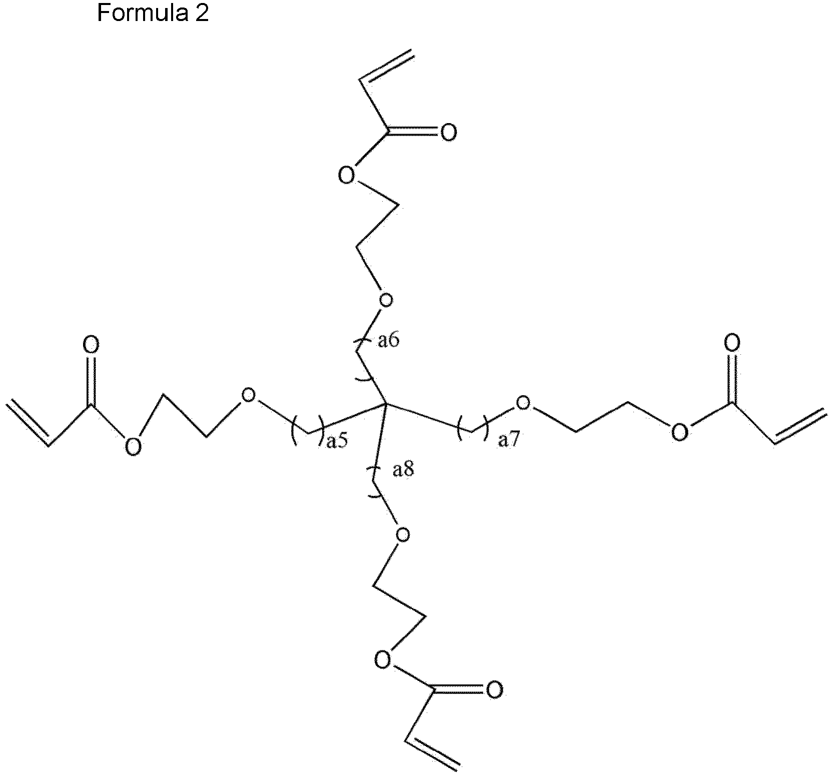 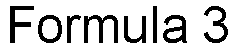 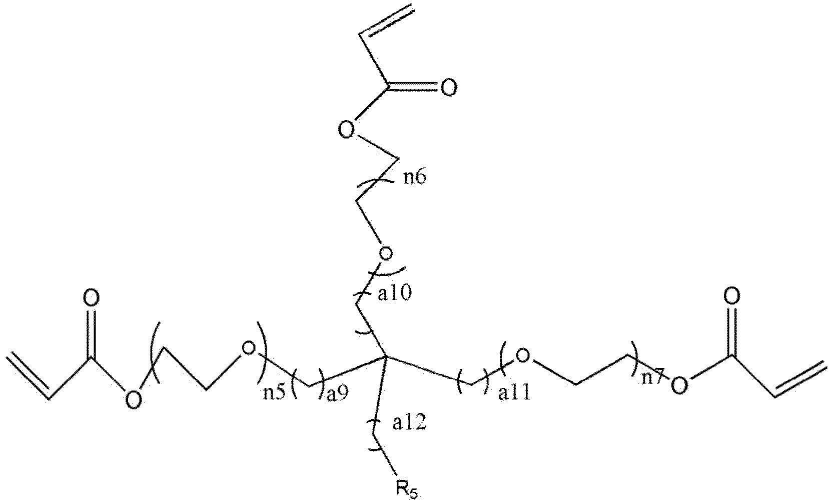 wherein, in Formulae 2 and 3, R⁵ may be an alkyl group having 1 to 10 carbon atoms, n⁵ to n⁷ may each be an integer of 1 to 5, and a⁵ to a¹² may each be an integer of 1 to 10.

The compound of Formula 1 may include, for example, ethoxylated pentaerythritol tetraacrylate or ethoxylated trimethylolpropane triacrylate.

According to one embodiment, a non-crosslinkable acrylic binder may be used as the binder contained in the inorganic layer.

The content of the non-crosslinkable binder in the inorganic layer is 1 to 10 parts by weight, or 1 to 5 parts by weight, based on 100 parts by weight of total weight of the inorganic layer. When the content of the non-crosslinkable binder in the inorganic layer is within the ranges above, heat shrinkage resistance and fracture resistance characteristics are excellent.

The inorganic particles contained in the inorganic layer may be surface-treated to react with the crosslinkable binder. For example, the inorganic particles may be surface-treated with functional groups capable of reacting with the functional groups of the crosslinkable binder. When the inorganic particles are surface-treated, a crosslinking reaction may occur due to the reaction between the functional groups of the inorganic particles and the functional groups of the crosslinkable binder, and a crosslinking reaction between the functional groups of the inorganic particles may also occur, thereby improving the bonding strength between the inorganic particles and the crosslinkable binder, and improving adhesion to the substrate or coating density. For example, when the crosslinkable binder has an acrylate functional group, the inorganic particles may be surface-treated to have an acrylate group. According to another embodiment, a binder containing an aqueous crosslinkable reactive acrylamide-based copolymer may be used as the crosslinkable binder further contained in the inorganic layer. The aqueous crosslinkable reactive acrylamide-based copolymer contains two or more crosslinkable reactive groups which are crosslinkable with each other. Being usable in a one-component form without a crosslinking agent, the two or more crosslinkable reactive groups may undergo a crosslinking reaction with each other through a self-condensation reaction. Through this, an inorganic layer of a separator may be formed, thus making it possible to provide a separator with high heat resistance characteristics.

The crosslinkable reactive group may include: at least one first functional group selected from a carboxyl group, an amine group, and an isocyanate group; and at least one second functional group selected from a hydroxy group, an epoxy group, and an oxazoline group, and a crosslinking reaction may occur between the first functional group and the second functional group. For example, the crosslinkable reactive group may include a carboxyl group and a hydroxy group.

According to one embodiment, the equivalence ratio of the first functional group and the second functional group may be in the range of 30:70 to 70:30. The equivalent ratio of the first functional group and the second functional group may be in the range of, for example, 35:65 to 65:35, 40:60 to 60:40, or 45:55 to 55:45, for example, about 50:50. When the equivalent ratio of the first functional group and the second functional group is within the ranges above, a crosslinking reaction between the first functional group and the second functional group may proceed smoothly.

According to one embodiment, the acrylamide-based copolymer include (N-substituted) amide-based monomers, and the (N-substituted) amide-based monomers may include one or more selected from the group consisting of (meth)acrylamide, N,N-dialkyl(meth)acrylamide such as N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, N,N-di(t-butyl)(meth)acrylamide, etc., N-ethyl(meth)acrylamide, N-isopropyl(meth)acrylamide, N-butyl (meth)acrylamide, N-n-butyl (meth)acrylamide, N-methylol (meth)acrylamide, N-ethylol (meth)acrylamide, N-methylolpropane (meth)acrylamide, N-methoxymethyl (meth)acrylamide, N-methoxyethyl (meth)acrylamide, N-butoxymethyl (meth)acrylamide, and N-acryloylmorpholine.

The content of the (N-substituted) amide-based monomers is 30 to 90 mol%, 40 to 80 mol%, or 50 to 70 mol%, based on the total moles of monomer components constituting the acrylamide-based copolymer. When using an acrylamide-based copolymer having the content of the (N-substituted) amide-based monomers as described above, a decomposition temperature characteristic of 200 °C or higher may be exhibited.

According to one embodiment, the acrylamide-based copolymer may include: (N-substituted) amide-based monomers; and one or two or more acrylic monomers selected from the group consisting of a carboxyl group-containing monomer, a (meth)acrylic acid alkyl-based monomer, a hydroxyl group-containing monomer, an isocyanate group-containing monomer, an oxazoline group-containing monomer, a hydroxyl group-containing monomer, a polyfunctional (meth)acrylate-based monomer, an acid anhydride group-containing monomer, a sulfonic acid group-containing monomer, a phosphoric acid group-containing monomer, a succinimide-based monomer, a maleimide-based monomer, an itaconimide-based monomer, a cyano-containing monomer, an aminoalkyl (meth)acrylate-based monomer, an alkoxyalkyl (meth)acrylate-based monomer, an epoxy group-containing acrylic monomer, an acrylic acid ester-based monomer having heterocycles, halogen atoms, silicon atoms, and the like, an acryloylmorpholine, a (meth)acrylic acid ester having alicyclic hydrocarbon groups, a (meth)acrylic acid ester having aromatic hydrocarbon groups, and a (meth)acrylic acid ester obtained from alcohol derivatives of terpene compounds.

Here, two or more functional groups capable of crosslinking with each other may exist in the (N-substituted) amide-based monomers and the acrylic monomers, or may exist only in the acrylic monomers.

Specific examples of the acrylic monomers may include: a carboxyl group-containing monomer such as acrylic acid, (meth)acrylic acid, carboxyethyl acrylate, carboxypentyl acrylate, itaconic acid, maleic acid, fumaric acid, crotonic acid, isocrotonic acid, etc.; an alkyl (meth)acrylate-based monomer such as an alkyl (meth)acrylate-based monomer having a linear or branched alkyl group having 1 to 20 carbon atoms in the ester portion thereof, specifically, for example, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, isopentyl (meth)acrylate, hexyl (meth)acrylate, cyclohexyl (meth)acrylate, 2-ethylhexyl (meth)acrylate, heptyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, isooctadecyl (meth)acrylate, nonadecyl (meth)acrylate, myristyl (meth)acrylate, palmityl (meth)acrylate, stearyl (meth)acrylate, n-tetradecyl (meth)acrylate, etc.; a hydroxyl group-containing monomer such as hydroxyalkyl (meth)acrylate such as 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl (meth)acrylate, etc.; a polyfunctional (meth)acrylate-based monomer such as hexanediol diacrylate (HDDA), tripropyleneglycol diacrylate (TPGDA), ethyleneglycol diacrylate (EGDA), trimethylolpropane triacrylate (TMPTA), trimethylolpropaneethoxy triacrylate (TMPEOTA), glycerin propoxylated triacrylate (GPTA), pentaerythritol tetraacrylate (PETA), or dipentaerythritol hexaacrylate (DPHA); an acid anhydride group-containing monomer such as maleic anhydride, itaconic anhydride, etc.; a sulfonic acid group-containing monomer such as 2-(meth)acrylamido-2-methylpropanesulfonic acid, (meth)acrylamidopropanesulfonic acid, sulfopropyl (meth)acrylate, (meth)acryloyloxynaphthalenesulfonic acid, etc.; a phosphoric acid group-containing monomer such as [2-(2-hydroxyethyl)acryloyl] phosphate, etc.; a succinimide-based monomer such as N-(meth)acryloyloxymethylenesuccinimide, N-(meth)acryloyl-6-oxyhexamethylenesuccinimide, N-(meth)acryloyl-8-oxyhexamethylenesuccinimide, etc.; a maleimide-based monomer such as N-cyclohexylmaleimide, N-isopropylmaleimide, N-laurylmaleimide, N-phenylmaleimide, etc.; an itaconimide-based monomer such as N-methyl itaconimide, N-ethyl itaconimide, N-butyl itaconimide, N-octyl itaconimide, N-2-ethylhexyl itaconimide, N-cyclohexyl itaconimide, N-lauryl itaconimide, etc.; a cyano-containing monomer such as acrylonitrile, (meth)acrylonitrile, etc.; an aminoalkyl (meth)acrylate-based monomer such as aminoethyl (meth)acrylate, N,N-dimethylaminoethyl (meth)acrylate, N,N-dimethylaminoethyl (meth)acrylate, t-butylaminoethyl (meth)acrylate, etc.; an alkoxyalkyl (meth)acrylyate-based monomer such as methoxyethyl (meth)acrylate, ethoxyethyl (meth)acrylate, propoxyethyl (meth)acrylate, butoxyethyl (meth)acrylate, ethoxypropyl (meth)acrylate, etc.; an epoxy group-containing acrylic monomer such as glycidyl (meth)acrylate, etc.; an acrylic acid ester-based monomer having heterocycles, halogen atoms, silicon atoms, and the like, such as tetrahydrofurfuryl (meth)acrylate, fluorine atom-containing (meth)acrylate, silicone (meth)acrylate, etc.; acryloylmorpholine; a (meth)acrylic acid ester having alicyclic hydrocarbon groups, such as cyclopentyl (meth)acrylate, cyclohexyl (meth)acrylate, isobornyl (meth)acrylate, dicyclopentanyl (meth)acrylate, etc.; a (meth)acrylic acid ester having an aromatic hydrocarbon group, such as phenyl (meth)acrylate, phenoxyethyl (meth)acrylate, etc.; a (meth)acrylic acid ester obtained from alcohol derivatives of terpene compounds; or the like. The acrylamide-based copolymer may be used alone or in combination of two or more of the acrylic monomers described above.

According to one embodiment, the molar ratio of the (N-substituted) amide-based monomers and the acrylic monomers is in the range of 1:99 to 99:1, 20:80 to 80:20, 30:70 to 70:30, 40: 60 to 60:40, or 50:50. When the molar ratio of the (N-substituted) amide-based monomers and the acrylic monomers is within the ranges above, it is possible to form a coating layer of a separator with improved heat resistance.

The weight average molecular weight of the acrylamide-based copolymer is 100,000 to 1,000,000 g/mol, 150,000 to 800,000 g/mol, 200,000 to 700,000 g/mol, or 300,000 to 600,000 g/mol. When the weight average molecular weight of the acrylamide-based copolymer is within the ranges above, it is possible to manufacture a separator having a low shrinkage rate when stored at high temperatures.

The acrylamide-based copolymer may have a glass transition temperature of 150 °C or higher, 150 °C to 300 °C, 170 °C to 280 °C, or 190 °C to 250 °C. When the glass transition temperature of the acrylamide-based copolymer is within the ranges above, it is possible to form the separator having high heat resistance.

The acrylamide-based copolymer may include, for example, an acrylic acid-acrylamide-(2-acrylamido)-(2-methylpropanesulfonic acid) copolymer, an aqueous crosslinkable reactive polyacrylamide-acrylic acid-hydroxyethylacrylic copolymer, or any combination thereof.

According to one embodiment, the acrylamide-based copolymer may further include one or more non-acrylic monomers. By further including one or more non-acrylic monomers, it is possible to further improve the heat resistance of the copolymer and the adhesion to the porous substrate of the separator.

The non-acrylic monomers may be used without particular limitation as long as the monomers are copolymerizable monomers other than the acrylic monomers described above. Copolymerizable non-acrylic monomers may be, for example, vinyl esters, nitrogen-containing heterocyclic monomers, N-vinylcarboxylic acid amides, lactam monomers, olefin monomers, vinyl ether-based monomers, aromatic vinyl compounds, olefins or dienes, vinyl ethers, vinyl chloride, sulfonic acid group-containing monomers, imide group-containing monomers, isocyanate group-containing monomers, etc., and one or more thereof may be selected.

Specific examples of non-acrylic monomers may include: vinyl esters such as vinyl acetate, vinyl propionate, etc.; nitrogen-containing heterocyclic monomers such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloyl piperidine, N-(meth)acryloylpyrrolidine , N-vinylmorpholine, N-vinyl-2-piperidone, N-vinyl-3-morpholinone, N-vinyl-2-caprolactam, N-vinyl-1,3-oxazin-2-one, N-vinyl-3,5-morpholinedione, N-vinylpyrazole, N-vinylisoxazole, N-vinylthiazole, N-vinylisothiazole, N-vinylpyridazine, etc.; N-vinylcarboxylic acid amides; lactam-based monomers such as N-vinylcaprolactam, etc.; olefin-based monomers such as isoprene, butadiene, isobutylene, etc.; vinyl ether-based monomers such as methyl vinyl ether, ethyl vinyl ether, etc.; aromatic vinyl compounds such as vinyl toluene, styrene, etc.; olefins or dienes such as ethylene, butadiene, isoprene, isobutylene, etc.; vinyl ethers such as vinyl alkyl ether, etc.; vinyl chloride; sulfonic acid group-containing monomers such as styrene sulfonate, allyl sulfonate, sodium vinylsulfonate, etc.; imide group-containing monomers such as cyclohexylmaleimide, isopropylmaleimide, etc.; isocyanate group-containing monomers such as 2-isocyanate ethyl (meth)acrylate, etc.; and the like. These non-acrylic monomers may be used alone or in combination of two or more thereof.

The content of the non-acrylic monomers included in the acrylamide-based copolymer is not particularly limited, provide that the non-acrylic monomers do not impair the aqueous crosslinking reaction characteristics of the acrylamide-based copolymer and the high heat resistance characteristics of the separator. For example, the non-acrylic monomers may be included in a range of 0.1 to 30 mol%, based on the total moles of monomer components constituting the acrylamide-based copolymer.

The content of the acrylamide-based copolymer is 10 to 100 wt%, 30 to 95 wt%, 50 to 90 wt%, or 60 to 80 wt%, based on the total weight of the binder. In the above ranges, it is possible to provide a composition for forming an inorganic layer of a separator with improved heat resistance and adhesion to a substrate.

When the crosslinkable binder and the non-crosslinkable binder are included together, the weight ratio of the crosslinkable binder and the non-crosslinkable binder may be 8:2 to 2:8, specifically 3:7 to 7:3. When using the non-crosslinkable binder having the weight ratio within the ranges above, it is possible to manufacture a separator with improved adhesion and heat resistance.

The thickness of the porous substrate is 1 µm to 100 µm, 1 to 40 µm, 1 µm to 30 µm, 5 µm to 20 µm, 5 µm to 15 µm, or 5 µm to 10 µm. When using a porous substrate having the thickness within the ranges above, it is possible to manufacture a separator having an appropriate thickness that is thick enough to prevent short circuit between the positive electrode and negative electrode of the battery but not thick enough to increase the internal resistance of the battery.

The porosity of the porous substrate included in the separator is 5 % to 95 %, 30 % to 80 %, for example, 40 % to 60 %, and the air permeability may be 250 sec/100 cc or less, for example, 200 sec/100 cc or less, for example, 150 sec/100 cc or less. The pore size of the porous substrate in the separator may be 0.01 µm to 50 µm, 0.01 µm to 20 µm, or 0.01 µm to 10 µm. When the porosity, air permeability, and pore size of the porous substrate included in the separator are within the ranges above, a porous substrate with excellent mechanical properties can be obtained without increasing the internal resistance of the lithium battery.

The porous substrate may be a polymer film formed from any one polymer selected from the group consisting of, without limitation, polyolefins such as polyethylene and polypropylene, polyesters such as polyethylene terephthalate and polybutylene terephthalate, polyacetal, polyamide, polyimide, polycarbonate, polyetheretherketone, polyaryletherketone, polyetherimide, polyamideimide, polybenzimidazole, polyethersulfone, polyphenylene oxide, cyclic olefin copolymer, polyphenylene sulfide, and polyethylene naphthalate, or a mixture of two or more thereof.

In one example, the porous substrate may be a polyolefin-based substrate, and the polyolefin-based substrate has an excellent shut down function, which can contribute to improving the safety of the battery. The polyolefin-based substrate may be, for example, selected from the group consisting of a polyethylene single film, a polypropylene single film, a polyethylene/polypropylene double film, a polypropylene/polyethylene/polypropylene triple film, and a polyethylene/polypropylene/polyethylene triple film. In another example, the polyolefin-based resin may include a non-olefin resin in addition to the olefin resin, or may include a copolymer of olefin and non-olefin monomers.

For a method of manufacturing a separator according to one embodiment, any method available in the art may be used. For example, a separator may be manufactured by preparing a slurry containing inorganic particles, a first binder, and optionally inorganic particles, applying the slurry onto a porous substrate, and then performing drying and rolling processes.

The method of applying the slurry is not particularly limited, and any method available in the art may be used. For example, the separator may be formed by methods such as printing, compression, press fitting, roller application, blade application, brush application, dipping application, spray application, or stream application.

Before forming a porous adhesive layer on one or both sides of the separator substrate, pretreatment such as sulfonation treatment, graft treatment, corona discharge treatment, ultraviolet irradiation treatment, plasma treatment, or spatter etching treatment may be optionally performed to improve adhesion with the adhesive layer.

According to another embodiment of the present disclosure, provided is a secondary battery including: a positive electrode; negative electrode; a separator according to one embodiment, which is arranged between the positive electrode and the negative electrode; and an electrolyte.

The secondary battery may be, for example, a lithium secondary battery such as a lithium metal secondary battery, a lithium ion secondary battery, a lithium polymer secondary battery, or a lithium ion polymer secondary battery.

The method of manufacturing a secondary battery according to one embodiment is not particularly limited, and methods commonly used in the art may be used.

Hereinafter, reference will be made to a method of manufacturing a separator according to one embodiment.

An inorganic layer is provided on a porous substrate. When forming an inorganic layer, a coating method, lamination, coextrusion, or the like may be used. Non-limiting examples of the coating method include roll coating, spin coating, dip coating, flow coating, and spray coating, but are not necessarily limited thereto.

The inorganic layer may be cured by providing a composition for forming an inorganic layer on a porous substrate and then applying light or heat thereto. Photocuring may specifically be ultraviolet curing or far-infrared curing, for example, ultraviolet curing. Photocuring may include, for example, irradiating light to a porous heat-resistant layer in an amount of 500 mJ/cm² to 3000 mJ/cm², specifically 500 mJ/cm² to 2000 mJ/cm². Irradiation time may be from 1 minute to 15 hours. After the photocuring, a homogeneous cured density may be obtained through subsequent heat treatment, which may be performed for 1 to 10 hours at a temperature of about 50 °C to about 180 °C. In addition, thermal curing may include curing at about 40 °C to 120 °C, 50 °C to 100 °C, or 60 to 90 °C for 1 hour to 36 hours, specifically for about 5 hours to 24 hours.

The composition for forming an inorganic layer may include a polymerization initiator for crosslinking a material for forming the crosslinkable binder and/or the crosslinkable binder and the surface-treated inorganic particles.

The polymerization initiator acts as a curing agent that generates free radicals by heating or light, and may be appropriately selected depending on the types of the material for forming the crosslinkable binder and the functional group of the inorganic particles. For example, the initiator may be a thermal polymerization initiator such as peroxide-based, azo-based, amine-based, imidazole-based, or isocyanate-based initiator, or a photopolymerization initiator such as an onium salt or an organic metal salt.

Subsequently, an adhesive layer composition, which contains a first vinylidene fluoride-based polymer, a second vinylidene fluoride-based polymer, and a solvent, is coated and dried on the inorganic layer to thereby form an adhesive layer.

The adhesive layer composition may be provided in the form of a slurry by including water as the solvent. A composition for forming a first coating layer may further include an organic solvent, provided that the organic solvent does not impair the aqueous characteristics. The organic solvent may be an alcohol-based organic solvent. For example, the organic solvent may include one or more alcohol-based organic solvents selected from the group consisting of methanol, ethanol, propanol, and butanol. By using an alcohol-based organic solvent, it is possible to provide a composition for forming a first coating layer that is harmless to the body and has excellent drying characteristics, thereby ensuring mass production without reducing productivity. According to one embodiment, water and the organic solvent may be included at a volume ratio of 100:0 to 60:40, 95:5 to 80:20, or 85:15 to 70:30. Within the ranges above, it is possible to provide a composition for forming a first coating layer of a separator with improved drying characteristics.

The solvent is volatilized through drying after coating the adhesive layer composition, and thus, the solvent does not exist in the coating layer of a finally obtained separator.

The adhesive layer composition may further contain one or more adhesive binders selected from fluorine-based resins, polyacrylic acid-based compounds, and (meth)acrylic resins.

The method of coating the adhesive layer composition is not particularly limited, and may include, for example, one or more selected from forward roll coating method, reverse roll coating method, microgravure coating method, and direct metering coating method, but is not necessarily limited to these methods. The coating method may be, for example, a direct metering coating method.

The drying may be done by using hot air in a dryer. The drying may be, for example, carried out at a temperature of 30 to 80 °C, 35 to 75 °C, 40 to 70 °C, or 45 to 65 °C. In the above temperature ranges, it is possible to manufacture a separator with improved bending strength and peel strength.

A secondary battery according to another embodiment includes a positive electrode, a negative electrode, and the separator described above which is arranged between the positive electrode and the negative electrode. The secondary battery is, for example, a lithium secondary battery.

According to one embodiment, the secondary battery includes an electrode assembly, the electrode assembly including a positive electrode, a negative electrode, and the separator described above which is arranged between the positive electrode and the negative electrode, wherein the electrode assembly may be in the form of a wound jelly roll. By including the separator described above in the lithium battery, the adhesion between the electrodes (positive electrode and negative electrode) and the separator increases, so the volume change during charging and discharging of the lithium battery can be suppressed. Therefore, the deterioration of the lithium battery accompanied by the change in volume of the lithium secondary battery can be suppressed, thereby improving the lifespan characteristics of the lithium battery.

Lithium secondary batteries may be manufactured, for example, by the following method.

First, a negative active material, a conductive material, a binder, and a solvent are mixed to prepare a negative active material composition. The negative active material composition is coated directly onto a metal current collector to manufacture a negative plate. Alternatively, the negative active material composition may be cast on a separate support, and then, the film peeled from the support may be laminated on a metal current collector to thereby manufacture a negative plate. The form of negative electrode is not limited to the forms listed above and may have forms other than those listed above.

The negative active material includes a carbon-based material.

The carbon-based material may be crystalline carbon, amorphous carbon, or mixtures thereof. The crystalline carbon may be non-shaped, plate-shaped, flake-shaped, natural graphite, artificial graphite, graphene, carbon black, fullerene soot, or any combination thereof.

The natural graphite is a naturally produced graphite and includes flake graphite, high crystalline graphite, and microcrystalline or cryptocrystalline (amorphous) graphite. The artificial graphite is an artificially synthesized graphite, made by heating amorphous carbon to high temperature, and includes primary graphite or electrographite, secondary graphite, graphite fiber, and the like. Expanded graphite is obtained by intercalating chemicals such as acids or alkalis between layers of graphite and applying heat thereto to thereby expand the vertical layers of the molecular structure. The graphene includes a single layer or a plurality of single layers of graphite. The carbon black is a crystalline material with less regularity than graphite, and the carbon black may change into graphite when heated at about 3,000 °C for a long time. The fullerene soot is a carbon mixture including at least 3 wt% of fullerene, a polyhedral bundle-shaped compound consisting of 60 or more carbon atoms. The crystalline carbon may have a spherical, plate-shaped, fibrous, tubular or powder form.

The amorphous carbon may be soft carbon (low-temperature calcined carbon) or hard carbon, mesophase pitch carbide, calcined coke, polymer carbide, or any combination thereof.

The negative active material may further include a non-carbon based material. For example, the negative active material may include one or more selected from the group consisting of metals capable of forming an alloy with lithium, alloys of metals capable of forming an alloy with lithium, and oxides of metals capable of forming an alloy with lithium.

For example, the metal capable of forming an alloy with lithium may be Si, Sn, Al, Ge, Pb, Bi, Sb, Si-Y alloy (wherein Y is an alkali metal, an alkaline earth metal, a Group 13 to 16 element, a transition metal, a rare earth element, or any combination of these elements, but not Si), Sn-Y alloy (wherein Y is an alkali metal, an alkaline earth metal, a Group 13 to 16 element, a transition metal, a rare earth element, or any combination of these elements, but not Sn), or the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, or any combination thereof.

For example, the transition metal oxide may be lithium titanium oxide, vanadium oxide, lithium vanadium oxide, or the like.

For example, the non-transition metal oxide may be SnO₂, SiOₓ(0<x<2), or the like.

Specifically, the negative active material may be one or more selected from the group consisting of Si, Sn, Pb, Ge, Al, SiOx(0<x≤2), SnOy(0<y≤2), Li₄Ti₅O₁₂, TiO₂, LiTiO₃, and Li₂Ti₃O₇, but is not necessarily limited thereto, and it is possible to use any non-carbon based negative active material commonly used in the art.

According to one embodiment, the negative active material may be a mixture of the carbon-based material and the non-carbon based material described above or a composite containing the carbon-based material and the non-carbon based material described above. The conductive material may include acetylene black, Ketjen black, natural graphite, artificial graphite, carbon black, acetylene black, Ketjen black, carbon fiber, metal powders of copper, nickel, aluminum, silver, and the like, metal fibers, and the like, and may also include one type or a mixture of more than one type of conductive material such as a polyphenylene derivative, but is not limited thereto, and any conductive materials available in the art may be used. Additionally, the crystalline carbon-based material described above may be added as the conductive material.

The binder may be a vinylidene fluoride/hexafluoropropylene copolymer, polyvinylidene fluoride (PVDF), polyacrylonitrile, polymethyl methacrylate, polytetrafluoroethylene, a styrene butadiene rubber-based polymer, or any combination thereof, but is not limited thereto, and any binder available in the art may be used.

The solvent may be N-methylpyrrolidone, acetone, water, or the like, but is not limited thereto, and any solvent available in the art may be used.

The contents of the negative active material, conductive material, binder, and solvent are at levels commonly used in lithium batteries. Depending on the use and configuration of the lithium battery, one or more of the conductive material, binder, and solvent may be omitted.

Meanwhile, the binder used to manufacture the negative electrode may be the same as the coating composition included in the adhesive layer of the separator.

Next, a positive active material, a conductive material, a binder, and a solvent are mixed to prepare a positive active material composition. The positive active material composition is coated and dried directly on a metal current collector to manufacture a positive plate. Alternatively, the positive active material composition may be cast on a separate support, and then, the film peeled from the support may be laminated on a metal current collector to thereby manufacture a positive plate.

The positive active material may include one or more selected from the group consisting of lithium cobalt oxide, lithium nickel cobalt manganese oxide, lithium nickel cobalt aluminum oxide, lithium iron phosphate oxide, and lithium manganese oxide, but is not necessarily limited thereto, and any positive active material available in the art may be used.

For example, a compound may be used, which is represented by any one of Formulae of: LiₐA_{1-b}B_{b}D₂ (wherein 0.90 ≤ a ≤ 1.8, and 0 ≤ b ≤ 0.5); LiₐE_{1-b}B_{b}O_{2-c}D_{c} (wherein 0.90 ≤ a ≤ 1.8, 0 ≤ b ≤ 0.5, 0 ≤ c ≤ 0.05); LiE_{2-b}B_{b}O_{4-c}D_{c} (wherein 0 ≤ b ≤ 0.5, 0 ≤ c ≤ 0.05); LiₐNi_{1-b-c}Co_{b}B_{c}D_{α} (wherein 0.90 ≤ a ≤ 1.8, 0 ≤ b ≤ 0.5, 0 ≤ c ≤ 0.05, 0 < α ≤ 2); LiₐNi_{1-b-c}Co_{b}B_{c}O_{2-α}F_{α} (wherein 0.90 ≤ a ≤ 1.8, 0 ≤ b ≤ 0.5, 0 ≤ c ≤ 0.05, 0 < α < 2); LiₐNi_{1-b-c}CO_{b}B_{c}O_{2-α}F₂ (wherein 0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (wherein 0.90 ≤ a ≤ 1.8, 0 ≤ b ≤ 0.5, 0 ≤ c ≤ 0.05, 0 < α ≤ 2); LiₐNi_{1-b-c}Mn_{b}B_{c}O_{2-α}F_{α} (wherein 0.90 ≤ a ≤ 1.8, 0 ≤ b ≤ 0.5, 0 ≤ c ≤ 0.05, 0 < α < 2); LiₐNi_{1-b-c}Mn_{b}B_{c}O_{2-α}F₂ (wherein 0.90 ≤ a ≤ 1.8, 0 ≤ b ≤ 0.5, 0 ≤ c ≤ 0.05, 0 < α < 2); LiₐNi_{b}E_{c}G_{d}O₂ (wherein 0.90 ≤ a ≤ 1.8, 0 ≤ b ≤ 0.9, 0 ≤ c ≤ 0.5, 0.001 ≤ d ≤ 0.1.); LiₐNi_{b}Co_{c}Mn_{d}GeO₂ (wherein 0.90 ≤ a ≤ 1.8, 0 ≤ b ≤ 0.9, 0 ≤ c ≤ 0.5, 0 ≤ d ≤ 0.5, 0.001 ≤ e ≤ 0.1.); LiₐNiGeO₂ (wherein 0.90 ≤ a ≤ 1.8, 0.001 ≤ b ≤ 0.1); LiₐCoG_{b}O₂ (wherein 0.90 ≤ a ≤ 1.8, 0.001 ≤ b ≤ 0.1); LiₐMnG_{b}O₂ (wherein 0.90 ≤ a ≤ 1.8, 0.001 ≤ b ≤ 0.1); LiₐMn₂G_{b}O₄ (wherein 0.90 ≤ a ≤ 1.8, 0.001 ≤ b ≤ 0.1); QO₂; QS₂; LiQS₂; V₂O₅; LiV₂O₅; LilO₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄.

In these formulae, A is Ni, Co, Mn, or any combination thereof; B is Al, Ni, Co, Mn, Cr, Fe, Mg, Sr, V, rare earth element, or any combination thereof; D is O, F, S, P, or any combination thereof; E is Co, Mn, or any combination thereof; F is F, S, P, or any combination thereof; G is Al, Cr, Mn, Fe, Mg, La, Ce, Sr, V, or any combination thereof; Q is Ti, Mo, Mn, or any combination thereof; I is Cr, V, Fe, Sc, Y, or any combination thereof; and J is V, Cr, Mn, Co, Ni, Cu, or any combination thereof.

Of course, a compound having a coating layer on the surface thereof may be used, or a mixture of the compound described above and the compound having a coating layer may be used. This coating layer may include coating element compounds of an oxide of a coating element, a hydroxide of a coating element, an oxyhydroxide of a coating element, an oxycarbonate of a coating element, or a hydroxycarbonate of a coating element. The compounds constituting these coating layers may be amorphous or crystalline. The coating elements included in the coating layer may include Mg, Al, Co, K, Na, Ca, Si, Ti, V, Sn, Ge, Ga, B, As, Zr, or mixtures thereof. For the process of forming the coating layer, any coating method (for example, spray coating, dipping method, etc.) may be used as long as the coating method does not adversely affect the physical properties of the positive active material, the surface of which is coated with the compounds including the coating elements, and as this is well-understood by persons skilled in the art, a detailed explanation has been omitted.

For example, LiNiO₂, LiCoO₂, LiMnₓO₂ₓ(x=1, 2), LiNi₁₋ₓMnₓO₂(0<x<1), LiNi_{1-x-y}CoₓMn_{y}O₂ (0≤x≤0.5, 0≤y≤0.5), LiFeO₂, V₂O₅, TiS, MoS, or the like may be used.

In the positive active material composition, the conductive material, binder, and solvent used may be the same as those in the negative active material composition. Meanwhile, it is also possible to form pores inside the electrode plate by further adding a plasticizer to the positive active material composition and/or the negative active material composition.

The contents of the positive active material, conductive material, common binder, and solvent are at levels commonly used in lithium batteries. Depending on the use and configuration of the lithium battery, one or more of the conductive material, common binder, and solvent may be omitted.

Meanwhile, the binder used to manufacture the positive electrode may be the same as the adhesive layer composition included in the adhesive layer of the separator.

Next, the separator described above is arranged between the positive electrode and the negative electrode.

In an electrode assembly including a positive electrode/separator/negative electrode, the separator arranged between the positive electrode and the negative electrode includes, as described above: a porous substrate; and an adhesive layer disposed on both sides of the porous substrate, wherein the adhesive layer includes the coating composition for a separator as described above.

The separator may be prepared separately and arranged between the positive electrode and the negative electrode. Alternatively, the separator may be prepared by winding the electrode assembly including the positive electrode/separator/negative electrode in the form of a jelly roll, accommodating the jelly roll in a battery case or pouch, pre-charging the jelly roll while thermally softening the jelly roll under pressure with accommodated in the battery case or pouch, hot rolling the charged jelly roll, cold rolling the charged jelly roll, and subjecting the charged jelly roll to a formation process, which is charging and discharging the charged jelly roll under pressure.

Next, the electrolyte is prepared.

The electrolyte may be in a liquid or gel state.

For example, the electrolyte may be an organic electrolyte solution. Additionally, the electrolyte may be solid. For example, the electrolyte may be boron oxide, lithium oxynitride, or the like, but is not limited thereto, and any solid electrolyte available in the art may be used. The solid electrolyte may be formed onto the negative electrode by using methods such as sputtering and the like.

For example, the organic electrolyte solution may be prepared. The organic electrolyte solution may be manufactured by dissolving lithium salts in an organic solvent.

The organic solvent may be any organic solvent commonly used in the art. For example, the organic solvent is propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, methyl propionate, ethyl propionate, propyl propionate, benzonitrile, acetonitrile, tetrahydrofuran, 2-methyltetrahydrofuran, γ-butyrolactone, dioxolane, 4-methyldioxolane, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethylether, or mixtures thereof.

For the lithium salts, any lithium salts available in the art may be used. For example, the lithium salts are LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO₂)(C_{y}F_{2y+1}SO₂) (wherein x and y is each a natural number), LiCl, Lil, or mixtures thereof.

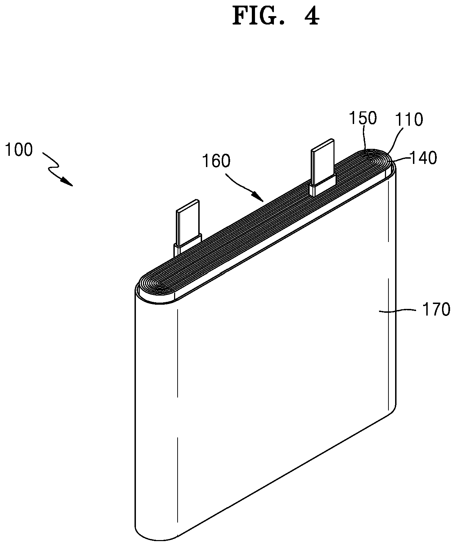

An example of a secondary battery is a prismatic lithium secondary battery. FIG. 4 is an exploded perspective view of a lithium battery according to one embodiment.

Referring to FIG. 4, a lithium secondary battery 100 according to one embodiment includes an electrode assembly 160 and a case 170 in which the electrode assembly 160 is embedded, the electrode assembly being obtained from winding a separator 110 according to one embodiment between a positive electrode 140 and a negative electrode 150.

The electrode assembly 160 may be, for example, in the form of a jelly roll which is formed by winding the positive electrode 140 and the negative electrode 150 with the separator 110 therebetween. As another example, the electrode assembly 160 may be in the form of a stack in which the separator 110 is stacked multiple times between the positive electrode 140 and the negative electrode 150.

The positive electrode 140, negative electrode 150, and the separator 110 are impregnated with an electrolyte solution (not shown).

The lithium secondary battery may be a lithium ion battery. The lithium battery may be a lithium polymer battery.

The lithium secondary battery may be cylindrical, prismatic, or pouch-shaped.

Due to their excellent high rate characteristics and lifespan characteristics, lithium batteries are suitable to be used in an electric vehicle (EV). For example, lithium batteries are suitable to be used in a hybrid vehicle such as a plug-in hybrid electric vehicle (PHEV) and0 the like.

The present disclosure will be described in more detail through Examples and Comparative Examples as follows. However, Examples are for illustrating the present disclosure and are not intended to limit the scope thereof.

### Preparation Example 1: Preparation of acrylic copolymer

In a 10 L four-necked flask equipped with a stirrer, a thermometer, and a cooling tube, distilled water (6361 g), acrylic acid (72.06 g, 1.0 mol), acrylamide (604.1 g, 8.5 mol), potassium persulfate (2.7 g, 0.01 mol), 2-acrylamido-2-methylpropanesulfonic acid (103.6 g, 0.5 mol), and 5 N aqueous lithium hydroxide solution (1.05 equivalents relative to the total amount of 2-acrylamido-2-methylpropanesulfonic acid) were added, and then, an operation of reducing the internal pressure to 10 mmHg with a diaphragm pump and returning the internal pressure to normal pressure with nitrogen was repeated three times.

The reaction was conducted for 12 hours while maintaining the temperature of the reaction solution stably between 65 °C and 70 °C. After cooling the reaction solution to room temperature, the pH of the reaction solution was adjusted to 7 to 8 by using 25% aqueous ammonia solution. In this way, poly(acrylic acid-co-acrylamide-co-2-acrylamido-2-methylpropanesulfonic acid) sodium salt was prepared. The molar ratio of acrylic acid, acrylamide, and 2-acrylamido-2-methylpropanesulfonic acid was 10:85:5. About 10 mL of the reaction solution (reaction product) was taken and non-volatile components of the reaction solution were measured, and the result was 9.5 % (theoretical value: 10 %).

### (Manufacture of separator)

### Example 1: Separator having stacked structure of adhesive layer/inorganic layer/porous substrate/inorganic layer/adhesive layer

First, boehmite (Nabaltec, Japan) with an average size of 300 nm was ground in a beadmill for 2 hours, and an inorganic dispersion of 40 wt% of the ground boehmite (70 wt% of water) was obtained. The acrylic copolymer prepared according to Preparation Example 1, which was a non-crosslinkable binder, was mixed with the inorganic dispersion so that the amount of boehmite was 95 wt%, and then, water was added thereto so that the total solid content was 25 wt% to thereby form a composition for forming an inorganic layer.

The prepared composition for forming an inorganic layer was applied by using a gravure coating method onto one side of polyethylene single layer substrate film having a thickness of : 5.5 µm, which is as a porous substrate, and then, dried for 10 seconds under the conditions of a drying temperature of 70 °C and a wind speed of 15 m/sec to thereby manufacture a separator having an inorganic layer with a coating thickness of 2 µm.

Separately, a first vinylidene fluoride-based polymer (first PVdF particles in Table 1, (a-1)) and a second vinylidene fluoride-based polymer (second PVdF particles in Table 1, (b-1))were mixed at a weight ratio of 1:1, and then a PAA compound (AQC, Sumittomo) (Mw: about 450,000) was applied thereto at 2 wt% of the total weight ratio to thereby form an adhesive layer composition.

This adhesive layer composition was applied onto a 7.5 µm thick ceramic separator, which has been primarily coated, to form an adhesive layer with a thickness of 1 µm to thereby manufacture a separator. Here, the density of the adhesive layer coated on both sides of the ceramic separator is 1.0 g/m2. An inorganic layer and an adhesive layer were each formed on the other side of the porous substrate according to the methods described above to thereby manufacture a separator having a stacked structure of adhesive layer/inorganic layer/porous substrate/inorganic layer/adhesive layer.

### Example 2

An adhesive layer and a separator were manufactured in the same manner as in Example 1, except that, when preparing the adhesive layer composition, the weight ratio of the first PVdF particles (a-1) to the second PVdF particles (b-1) was 1:3 instead of 1:1.

### Comparative Example 1: Separator having stacked structure of adhesive layer/inorganic layer/porous substrate/inorganic layer/adhesive layer

An adhesive layer composition was formed to form an adhesive layer and a separator having the formed adhesive layer were manufactured in the same manner as in Example 1, except that, when preparing the adhesive layer composition, PVdF particles (c) and the second PVdF particles (b-1) were mixed at a weight ratio of 1:1, instead of mixing the first PVdF particles (a-1) and second PVdF particles (b-1) at a weight ratio of 1:1.

### Reference Example 1

An adhesive layer composition was formed to form an adhesive layer and a separator having the formed adhesive layer were manufactured in the same manner as in Example 1, except that, when preparing the adhesive layer composition, first PVdF particles (a-2) and second PVdF particles (b-2) were mixed at a weight ratio of 1:1, instead of mixing the first PVdF particles (a-1) and the second PVdF particles (b-1) at a weight ratio of 1:1.

### Comparative Example 2

An adhesive layer composition was formed to form an adhesive layer and a separator having the formed adhesive layer were manufactured in the same manner as in Example 1, except that, when preparing the adhesive layer composition, only the first PVdF particles (a-1) were added and mixed, instead of mixing the first PVdF particles (a-1) and the second PVdF particles (b-1) at a weight ratio of 1:1.

### Comparative Example 3

An adhesive layer composition was formed to form an adhesive layer and a separator having the formed adhesive layer were manufactured in the same manner as in Example 1, except that, when preparing the adhesive layer composition, only the PVdF particles (c) were added and mixed, instead of mixing the first PVdF particles (a-1) and the second PVdF particles (b-1) at a weight ratio of 1:1.

### Comparative Example 4

An adhesive layer composition was formed to form an adhesive layer and a separator having the formed adhesive layer were manufactured in the same manner as in Example 1, except that, when preparing the adhesive layer composition, only the second PVdF particles (b-1) were added and mixed, instead of mixing the first PVdF particles (a-1) and the second PVdF particles (b-1) at a weight ratio of 1:1.

**Table 1**

| Classification | PVDF | | | | |
|---|---|---|---|---|---|
| | a-1 | a-2 | b-1 | b-2 | c |
| Solation temperature (°C) | 80 | 80 | 100 | 100 | 82 |
| Content of HFP repeating unit (mol%) | 15 | 15 | 0 | 0 | 17 |
| Content of maleic acid repeating unit (mol%) | 1 | 1 | 0 | 0 | 0 |
| Particle size (D50) (nm) | 260 | 130 | 250 | 100 | 230 |

In Table 1, PVDF a-1 and a-2 were obtained commercially as XPH-883 from Solvay, PVDF c was obtained commercially as RC10,279 from Arkema, and PVDF b-1 and b-2 were obtained commercially as XPH-838 LCS from Solvay. In Table 1, the solation temperature of each PVDF was evaluated according to the following method.

An electrolyte solution (1 M LiBF₄ in propylene carbonate (PC)) was added to and mixed with each PVDF to pretreat the PVDF. The PVDF and the electrolyte solution were mixed at a weight ratio of 1:5. The pretreated PVDF was measured by DSC(Differential Scanning Calorimetry). The measurement with DSC was performed at 25 °C to 150 °C, and the scan rate was 10 °C/min. The solation temperature of PVDF evaluated according to this method represents the actual behavior temperature of PVdF under the electrolyte solution.

Table 2 summarizes the compositions of PVDF used in the adhesive layer compositions of Examples 1-2, Reference Example 1, and Comparative Examples 1-4.

**Table 2**

| | Example 1 | Example 2 | Comparati ve Example 1 | Referenc e Example 1 | Compar ative Example 2 | Compar ative Example 3 | Com parat ive Exa mple 4 |
|---|---|---|---|---|---|---|---|
| First PVdF | a-1 | a-1 | c | a-2 | a-1 | c | |
| Second PVdF | b-1 | b-1 | b-1 | b-2 | | - | b-1 |
| First PVdF | 1 | 1 | 1 | 1 | 1 | 1 | - |
| Second PVdF | 1 | 3 | 1 | 1 | | | 1 |

### (Manufacture of lithium secondary batteries)

### Manufacture Example 1

### (Manufacture of negative electrode)

A negative electrode was manufactured according to the following process.

97 wt% of graphite particles with an average particle diameter of 25 µm, 1.5 wt% of styrene-butadiene rubber (SBR) binder, and 1.5 wt% of carboxymethyl cellulose (CMC) were mixed, and the mixture was added to distilled water and stirred for 60 minutes by using a mechanical stirrer to thereby manufacture a negative active material slurry. The slurry was applied onto a 10 µm thick copper current collector by using a doctor blade, dried in a hot air dryer at 100 °C for 0.5 hours, dried again for 4 hours under the conditions of vacuum and 120 °C, and then roll-pressed, to thereby manufacture a negative electrode.

### (Manufacture of positive electrode)

Separately, a positive electrode was manufactured according to the following process.

97 wt% of LiCoO₂, 1.5 wt% of carbon black powder as a conductive material, and 1.5 wt% of polyvinylidene fluoride (PVdF) were mixed, and the mixture was added to N-methyl-2-pyrrolidone solvent and stirred by using a mechanical stirrer for 30 minutes to thereby prepare a positive active material slurry. The slurry was applied onto a 20 µm thick aluminum current collector by using a doctor blade, dried in a hot air dryer at 100 °C for 0.5 hours, dried again for 4 hours under the conditions of vacuum and 120 °C, and then roll-pressed, to thereby manufacture a positive electrode.

### (Electrode assembly jelly roll)

The separator obtained according to Example 1 was arranged between the positive electrode and negative electrode manufactured as described above, and then, a winding process was applied thereto, to thereby prepare an electrode assembly jelly roll. The jelly roll was inserted into a pouch, an electrolyte solution was injected thereinto, and then the pouch was vacuum sealed.

The electrolyte solution used was 1.3 M LiPF₆ dissolved in a mixed solvent of ethylene carbonate (EC), ethylmethyl carbonate (EMC), and diethyl carbonate (DEC) at a volume ratio of 3:5:2.

The jelly roll inserted into the pouch was pressed at a temperature of 80 °C for 3 minutes with a pressure of 11.7 kgf/cm² to thereby manufacture a lithium battery.

### Manufacture Example 2

A lithium battery was manufactured in the same manner as in Manufacture Example 1, except that the separator of Example 2 was used instead of the separator of Example 1.

### Comparative Manufacture Examples 1 to 4

Lithium batteries were manufactured in the same manner as in Manufacture Example 1, except that the separators of Comparative Examples 1 to 4 were used instead of the separator of Example 1.

### Reference Manufacture Example 1

A lithium battery was manufactured in the same manner as in Manufacture Example 1, except that the separator of Reference Example 1 was used instead of the separator of Example 1.

### Evaluation Example 1: Air permeability

For the separators according to Example 1, Example 2, Comparative Example 1, Reference Example 1, and Comparative Examples 2 to 4, the unit thickness of the each separator was measured by using an air permeability meter (Asahi Seiko OKEN Type Air Permeation Tester: EGO1-55-1MR) according to the following method.

10 specimens were fabricated by cutting the separator at 10 different points thereof into 10 circles each having a diameter of 1 inch, and then, ASAHI SEIKO OKEN TYPE Air Permeation Tester EG01-55-1MR (Asahi Seiko), an air permeability measuring device, was used to measure the time for 100 cc of air to pass through each of the specimens. The times were each measured five times, and then, the average value thereof was calculated to measure air permeability.

For the air permeability measuring device, setting conditions were as follows: a measurement pressure was 0.05 mPa; a cylinder pressure was 2.5 kg/cm²; a set time was 10 seconds; and an average of DATA was obtained by measuring the air permeability 10 times or more for the specimen having a length of 1 m at 10 cm intervals.

In Table 3, △ air permeability (sec/100 cc) represents a value which is obtained by subtracting the initial air permeability from the air permeability after adhesion.

### Evaluation Example 2: Electrode adhesion (wet adhesion)

A positive electrode was arranged on one side of the each separator manufactured in Example 1, Example 2, Comparative Example 1, Reference Example 1, and Comparative Examples 2 to 4, and a polyethylene non-woven fabric was arranged on the other side of the separator and adhesion was carried out under the conditions of 300 kgf/cm at about 80 °C for 1 hour to thereby manufacture a unit cell. The unit cell was provided with an electrolyte solution. As the electrolyte solution, 1M LiBF₄ dissolved in propylene carbonate (PC) was used.

For the positive electrode, LiCoO₂, polyvinylidene fluoride, and carbon black as a conductive material were mixed to prepare a mixture, and uniformly dispersed by removing air bubbles from the mixture by using a mixer to thereby prepare a slurry for forming a positive active material layer. A solvent, N-methyl 2-pyrrolidone, was added to the mixture, and the mixing ratio of the composite positive active material, polyvinylidene fluoride, and carbon black was 98:1:1 by weight. The slurry prepared according to the process above was coated onto an aluminum foil by using a doctor blade to form a thin electrode plate, which was then dried at 135 °C for 3 hours or more and then was subjected to rolling and vacuum drying processes to thereby manufacture a positive electrode.

Subsequently, adhesion of the unit cell was carried out under the conditions of about 80 °C and 300 kgf/cm for 1 hour. Afterwards, the unit cell was dismantled and wet adhesion was evaluated through a peel test between the separator and the positive electrode, and the evaluation results are listed in Table 3.

**Table 3**

| Classification | | Examp le 1 | Example 2 | Compara tive Example 1 | Referen ce Exampl e 1 | Compara tive Example 2 | Comp arative Examp le 3 | Comp arative Examp le 4 |
|---|---|---|---|---|---|---|---|---|
| Wet adhesi on | gf/m m | 0.8 | 0.6 | 0.2 | 0.3 | 1.2 | 0.4 | 0.1 |
| Initial air perme ability (A) | sec/ 100 cc | 161 | 165 | 159 | 243 | 157 | 171 | 166 |
| Air perme ability after adhesi on (B) | sec/ 100 cc | 224 | 202 | 217 | 398 | 1433 | 758 | 205 |
| Δ Air perme ability (B)-(A) | sec/ 100 cc | 63 | 37 | 58 | 137 | 1276 | 587 | 39 |

Referring to Table 3, it was found that after adhesion of the separators of Examples 1 and 2, air permeability characteristics thereof were improved as compared to the separators of Comparative Example 1 and Comparative Examples 2 to 4. As can be seen in Table 3, the separator of Comparative Example 2 had excellent wet adhesion but poor air permeability characteristics after adhesion. In addition, the separators of Comparative Examples 1 and 4 had good air permeability characteristics after adhesion as shown in Table 3, but the adhesion between the electrode and the substrate of the separator was poor, so it was difficult to obtain a great adhesion strength between the electrode and the adhesive layer.

In the descriptions above, embodiments have been described with reference to the drawings and Examples, but are is merely examples, and those skilled in the art will understand that various modifications and other equivalent embodiments are possible. Therefore, the scope of protection of the present disclosure should be determined by the appended claims.

Although embodiments are described above with reference to the Preparation Examples, those skilled in the art will understand that various modifications and changes can be made without departing from the spirit and scope of the appended claims.

## Claims

1. A separator for a secondary battery, the separator comprising a porous substrate, an inorganic layer located on at least one side of the porous substrate, and an adhesive layer located on the inorganic layer,
wherein the adhesive layer comprises first vinylidene fluoride-based polymer particles and second vinylidene fluoride-based polymer particles, having different solation temperatures.

2. The separator for a secondary battery of claim 1, wherein the first vinylidene fluoride-based polymer particles are
a first copolymer containing a vinylidene fluoride (VDF) repeating unit, a hexafluoropropylene (HFP) repeating unit, and a repeating unit having one or more functional groups selected from C=O and OH groups.

3. The separator for a secondary battery of claim 2,
wherein a content of the HFP repeating unit is 10 mol% or more, and a content of the repeating unit having one or more functional groups selected from C=O and OH groups is more than 0 mol% but not more than 3 mol%.

4. The separator for a secondary battery of claim 1,
wherein a solation temperature of the first copolymer is 85 °C or lower.

5. The separator for a secondary battery of claim 1,
wherein the second vinylidene fluoride-based polymer particles are selected from
i) polyvinylidene fluoride particles having a solation temperature of 100 °C or higher, and
ii) a second copolymer having a solation temperature of 100 °C or higher and containing a vinylidene fluoride (VDF) repeating unit and a hexafluoropropylene (HFP) repeating unit.

6. The separator for a secondary battery of claim 1,
wherein a content of the hexafluoropropylene (HFP) repeating unit in the second copolymer is 3 mol% or less.

7. The separator for a secondary battery of claim 1,
wherein the first vinylidene fluoride-based polymer particles and the second vinylidene fluoride-based polymer particles have a size of 200 nm to 1 µm.

8. The separator for a secondary battery of claim 1,
wherein the repeating unit having one or more functional groups selected from C=O and OH groups of the first copolymer includes at least one selected from the group consisting of maleic acid, (meth)acrylic acid, a derivative of (meth)acrylate having a hydroxy group, itaconic acid or a derivative thereof, a derivative thereof, and hydroxyalkane allyl ether.

9. The separator for a secondary battery of claim 1,
wherein a content of the second vinylidene fluoride-based polymer particles is 10 to 90 parts by weight, based on 100 parts by weight of a total weight of the first vinylidene fluoride-based polymer particles and the second vinylidene fluoride-based polymer particles.

10. The separator for a secondary battery of claim 1,
wherein a solation temperature of the first vinylidene fluoride-based polymer particles is 70 °C to 85 °C, a content of the hexafluoropropylene (HFP) repeating unit is 10 mol% to 20 mol%, and a content of the repeating unit having one or more functional groups selected from C=O and OH groups is 1 to 3 mol% .

11. The separator for a secondary battery of claim 1,
wherein a solation temperature of the second vinylidene fluoride-based polymer particles is 100 to 150 °C.

12. The separator for a secondary battery of claim 1,
wherein a total content of the first vinylidene fluoride-based polymer particles and the second vinylidene fluoride-based polymer particles in the adhesive layer is 10 to 98 parts by weight, based on 100 parts by weight of a total weight of the adhesive layer.

13. The separator for a secondary battery of claim 1,
wherein the separator comprises the adhesive layer or the inorganic layer disposed on the other side of the porous substrate.

14. The separator for a secondary battery of claim 1,
wherein the separator comprises the adhesive layer disposed on the other side of the porous substrate, and further comprises an inorganic layer disposed between the adhesive layer and the porous substrate.

15. The separator for a secondary battery of claim 1,
wherein the adhesive layer further comprises one or more adhesive binders selected from fluorine-based resins, polyacrylic acid-based compounds, and (meth)acrylic resins.

16. The separator for a secondary battery of claim 1,
wherein the inorganic layer comprises inorganic particles and a binder,
the inorganic particles are Al₂O3, SiO₂, B₂O₃, Ga₂O₃, TiO₂, SnO₂, boehmite, BaSO₄, MgO, Mg(OH)₂, clay, ZnO, CaO, CeO₂, NiO, GaO, ZrO2, Y₂O₃, SrTiO₃, BaTiO₃, or any combination thereof.

17. The separator for a secondary battery of claim 16,
wherein the binder is a polyvinylidene fluoride (PVdF)-based polymer, polymethylmethacrylate, polyacrylonitrile, polyvinylpyrrolidone, polyvinylacetate, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxylmethyl cellulose, an acrylonitrile-butadiene-styrene copolymer, poly(acrylic acid-co-acrylamide-co-2-acrylamido-2-methylpropanesulfonic acid), a polyacrylamide-acrylic acid-hydroxyethyl acrylic copolymer, or any combination thereof.

18. The separator for a secondary battery of claim 16,
wherein a content of the inorganic particles is 50 to 95 parts by weight, based on 100 parts by weight of a total weight of the inorganic layer.

19. A secondary battery comprising a positive electrode, a negative electrode, and the separator of any one of claims 1 to 18 arranged therebetween.
